# EUROPÄISCHE PATENTANMELDUNG

(11) **EP 1 862 049 A1**
(43) Veröffentlichungstag der Anmeldung: **05.12.2007**
(21) Anmeldenummer: 07006417.5
(22) Anmeldetag: 28.03.2007
(51) Int. Cl.: A01B 69/00, A01D 41/127, G05D 1/02

(54) **Landmaschine**

(30) Priorität: 01.06.2006 DE 102006025699
(71) Anmelder: Alois Pöttinger Maschinenfabrik GmbH, 4710 Grieskirchen (AT)
(72) Erfinder: Baldinger, Markus, Dr. Dipl.-Ing., 4084 St. Agatha (AT); Baldinger, Martin, Dr. Dipl.-Ing., 4722 Peuerbach (AT)
(74) Vertreter: Thoma, Michael

(57) **Zusammenfassung**

Die vorliegende Erfindung betrifft eine Landmaschine mit einer Bearbeitungseinrichtung zur Erntegut-, Saatgut- und/oder Bodenbearbeitung, einer Erfassungseinrichtung zur berührungslosen Erfassung des Verlaufs und/oder der Lage einer Bestandskante, insbesondere Erntegutschnittkante oder Bodenfurche, einer zu bearbeitenden Fläche, sowie einer Steuereinrichtung zur Steuerung des Anschlussfahrens der Landmaschine entlang der erfassten Bestandskante. Erfindungsgemäß zeichnet sich die Landmaschine dadurch aus, dass die Erfassungseinrichtung zumindest einen akustischen, im hörbaren Frequenzspektrum arbeitenden Abtastsensor aufweist, der die Bestandskante in einem Frequenzbereich von 20 Hz bis 20 kHz abtastet.

## Beschreibung

Die vorliegende Erfindung betrifft eine Landmaschine mit einer Bearbeitungseinrichtung zur Erntegut-, Saatgut- und/oder Bodenbearbeitung, einer Erfassungseinrichtung zur berührungslosen Erfassung des Verlaufs und/oder der Lage einer Bestandskante, insbesondere Erntegutschnittkante oder Bodenfurche, der zu bearbeitenden Fläche, sowie einer Steuereinrichtung zur Steuerung des Anschlussfahrens der Landmaschine entlang der erfassten Bestandskante.

Bei der Feldbearbeitung mit landwirtschaftlichen Maschinen ist regelmäßig ein Anschlussfahren durchzuführen, um Spur für Spur mit der begrenzten Arbeitsbreite der Landmaschine die gesamte zu bearbeitende Erntegut- oder Bodenfläche zu bearbeiten. Hierbei ist die jeweilige Landmaschine möglichst präzise entlang einer Bestandskante der zu bearbeitenden Fläche entlang zu führen, um einerseits möglichst die gesamte Arbeitsbreite der Bearbeitungseinrichtung der Landmaschine zu nutzen und damit hohe Flächenleistungen zu erreichen, andererseits jedoch ein Auslassen bzw. eine Nicht-Bearbeitung eines Flächenstreifens zu vermeiden. Eine Bestandskante ist dabei beispielsweise bei der Grünfutterbearbeitung die Schnittkante des Grases, die den bereits abgemähten Bereich von dem noch nicht abgemähten Bereich trennt. In ähnlicher Weise ist bei der Getreideernte die Bestandskante die Getreideschnittkante, die den bereits geschnittenen Bereich von dem noch nicht geschnittenen Bereich trennt. Bei der Bodenbearbeitung kann die Bestandskante insbesondere durch eine Bodenfurche definiert sein, die z. B. den bereits umgepflügten Bereich von dem noch nicht umgepflügten Bereich trennt. Auch beim Einfahren von Erntegut, beispielsweise mittels eines Ladewagens, kann eine Bestandskante definiert sein, beispielsweise durch eine Erntegutkante, die den Flächenbereich, auf dem noch einzufahrendes Erntegut liegt, von dem Flächenbereich trennt, von dem das Erntegut bereits abgeräumt ist.

Ein solches Anschlussfahren erfordert bisweilen hohe Geschicklichkeit, wenn das Sichtfeld auf die Bestandskante verdeckt ist oder die Bestandskante und die seitliche Arbeitsbereichskante der Bearbeitungswerkzeuge nicht gleichzeitig sichtbar sind, z. B. weil der Maschinenführer in Fahrtrichtung nach vorne schauen muss, die Bearbeitungswerkzeuge aber hinter dem Führerhaus liegen. Zum anderen geht gerade bei größeren Feldern mit einem solchen Anschlussfahren eine gewisse Monotonie einher, so dass es mit nachlassender Konzentration zu Fehlern beim Anschlussfahren kommt.

Es wurde daher bereits vorgeschlagen, an dem Schlepper oder einem daran angebauten Anbaugerät eine Erfassungseinrichtung vorzusehen, die die Lage der Bestandskante relativ zu den Bearbeitungswerkzeugen überwacht, um dem Maschinenführer durch eine mit der Erfassungseinrichtung verbundene Steuereinrichtung, beispielsweise in Form eines Anzeigegeräts, welches die erfasste Bestandskante und ihre Lage zur Landmaschine anzeigt, eine Lenkhilfe zu geben.

Die DE 102 04 702 A1 beschreibt eine Landmaschine in Form eines Mähdreschers, bei dem im Randbereich des Schneidwerks eine Bestandskantenerfassungseinrichtung in Form eines Radar- oder Ultraschallsensors vorgesehen ist, der die Bestandskante berührungslos abtastet. Das von dem Sensor erhaltene Signal wird in einen nachgeschalteten Lenkregler gespeist, der die Lenkräder des Mähdreschers automatisch so lenkt, dass eine optimale Ausnutzung der Schnittbreite des Schneidwerks erzielt wird. Auch die DE 195 08 941, die DE 195 08 942 oder die DE 195 08 944 beschreiben eine berührungslose Bestandskantenerfassung mit Ultraschallsensoren.

Bei einer derartigen berührungslosen Bestandskantenabtastung ist jedoch die Genauigkeit und die Zuverlässigkeit der Bestimmung der tatsächlichen Lage der Bestandskante durchaus schwierig, da das Abtastsignal diversen Störeinflüssen unterworfen ist. Zudem ist die Bestandskante selbst oftmals nicht sauber ausgebildet. Ein weiteres Problem liegt insbesondere auch darin, dass die zu erfassenden Bestandskanten variieren. Wenn beispielsweise der Abtastsensor am Schlepper angebracht ist, an den verschiedene Anbaugeräte montiert werden können, soll der Abtastsensor beispielsweise Bodenfurchen beim Ackern und andererseits Schnittgutkanten beispielsweise beim Mähen erfassen können. Die bislang vorgeschlagenen Systeme für die Bestandskantenerfassung zum Anschlussfahren lösen diese vielfältigen Probleme bislang nur unbefriedigend.

Der vorliegenden Erfindung liegt daher die Aufgabe zugrunde, eine verbesserte Landmaschine der genannten Art zu schaffen, die Nachteile des Standes der Technik vermeidet und letzteren in vorteilhafter Weise weiterbildet. Vorzugsweise soll eine zuverlässige, präzise Bestandskantenerfassung zur Steuerung des Anschlussfahrens erreicht werden, die verschiedene Bestandskanten gleichermaßen erfassen kann.

Erfindungsgemäß wird diese Aufgabe durch eine Landmaschine gemäß Anspruch 1 gelöst. Bevorzugte Ausgestaltungen der Erfindung sind Gegenstand der abhängigen Ansprüche.

Erfindungsgemäß wird die Bestandskantenerfassung mit Hilfe eines akustischen Sensors durchgeführt, der im hörbaren Frequenzspektrum arbeitet. Dabei wird der zu erfassende Bestandskantenabschnitt mit akustischen Signalen in einem Frequenzbereich von 20 Hz bis 20 kHz abgetastet. Eine Bodenabtastung mit Schallwellen im für das menschliche Ohr hörbaren Frequenzspektrum erweist sich als besonders vorteilhaft, da mit diesem Frequenzbereich, ggf. je nach Anwendung bevorzugten Ausschnitten hieraus, unterschiedliche Bestandskanten gleicherma-βen präzise erfasst werden können.

Insbesondere zur präzisen Erfassung von Erntegutschnittkanten kann der zumindest eine Abtastsensor und/oder auch ein weiterer Abtastsensor in einem oberen Frequenzbereich des hörbaren Spektrums arbeiten, um Signalreflexionen von dem noch ungeschnittenen Erntegut zu erhalten. Dabei wird vorteilhafterweise die Erntegutschnittkante mit akustischen Signalen im Bereich von 10 kHz bis 20 kHz abgetastet. Vorzugsweise sendet der Abtastsensor dabei das Abtastsignal seitlich, schräg und/oder von oben auf die Schnittkante. Anhand der Laufzeit und des Signals kann die Schnittkante detektiert werden.

Vorteilhafterweise wird dabei mit einem breitbandigen Abtastsignal gearbeitet. Durch solche breitbandigen Sendesignale wird die Abtastung sozusagen immun gegen Umgebungsgeräusche. Um hier eine günstige Signalauswertung zu ermöglichen, wird in Weiterbildung der Erfindung mit einer Bandbreite von wenigstens 5 kHz, vorzugsweise etwa 10 kHz, gearbeitet.

Nach einer bevorzugten Ausführungsform der Erfindung arbeitet der zumindest eine Abtastsensor mit einem Abtastsignalpuls aus der Gauss'schen Pulsfamilie, wobei nach einer vorteilhaften Ausführung der Erfindung mit einem Abtastsignalpuls der Gauss'schen Pulsfamilie zweiter Ordnung gearbeitet werden kann. Die Pulsdauer kann dabei grundsätzlich unterschiedlich gewählt werden, wobei vorzugsweise eine Pulsdauer von weniger als 10 ms gewählt wird. Nach einer bevorzugten Ausführung der Erfindung arbeitet der zumindest eine Abtastsensor mit einem Gauss'schen Signalpuls mit einer Dauer im Bereich von 0,5 bis 5 ms, insbesondere etwa 1 ms.

Alternativ oder zusätzlich kann der Abtastsensor auch in einem Chirpmodus betrieben werden und die zu erfassende Bestandkante mit Chirpsignalen abtasten. Mit solchen Chirpsignalen können Reflexionen je nach Frequenz bereits an der Erntegutschnittkantenoberfläche erreicht werden, so dass eine präzise Aussage über den Verlauf der Schnittkante getroffen werden kann. Nach einer bevorzugten Ausführung der Erfindung wird dabei mit Chirpsignalen von 10 kHz bis 20 kHz gearbeitet.

Die Periodendauer der Abtastsignale kann grundsätzlich verschieden gewählt werden. In vorteilhafter Weiterbildung der Erfindung liegt die Periodendauer unter einer Sekunde, vorzugsweise im Bereich von 50 ms bis 250 ms. Nach einer bevorzugten Ausführung der Erfindung wird mit einer Periodendauer von etwa 100 ms gearbeitet.

Grundsätzlich kann die Bodenerfassungseinrichtung mehrere Abtastsensoren aufweisen, die in verschiedenen Frequenzbereichen des hörbaren Spektrums arbeiten können. Um jedoch eine einfach bauende, kostengünstige Ausführung zu erreichen, kann in Weiterbildung der Erfindung vorgesehen sein, dass der zumindest eine Abtastsensor abwechselnd in zwei verschiedenen Betriebsarten betrieben werden kann. Insbesondere kann der Abtastsensor mit verschiedenen Signalformen, beispielsweise einmal mit Signalpulsen der Gauss'schen Pulsfamilie und einmal mit Chirpsignalen, betrieben werden. Alternativ oder zusätzlich kann vorgesehen sein, dass der Abtastsensor in verschiedenen Frequenzbereichen betreibbar ist, beispielsweise um eine Anpassung an verschiedene abzutastende Bestandskanten zu ermöglichen. Beispielsweise kann der Abtastsensor zur Abtastung einer Bodenfurche in einem anderen Frequenzbereich betrieben werden als zur Abtastung einer Grasschnittkante. Durch den Betrieb des Abtastsensors in verschiedenen Betriebsmodi kann ein und derselbe Sensor an verschiedene Abtastaufgaben angepasst werden.

Um in der gewünschten Weise mit breitbandigen Abtastsignalen ggf. in verschiedenen Frequenzbereichen den Boden abtasten zu können, umfasst der Abtastsensor in Weiterbildung der Erfindung einen Breitbandlautsprecher sowie einen Breitbandempfänger für einen Frequenzbereich von insgesamt 20 Hz bis 22 kHz.

In Weiterbildung der Erfindung ist der zumindest eine Abtastsensor vorteilhafterweise in einem Randbereich der Bearbeitungseinrichtung der jeweiligen Landmaschine angeordnet, so dass der Abtastsensor vorteilhafterweise zumindest den gerade erfassten Randbereich der Arbeitsbreite des Bearbeitungswerkzeuges der Landmaschine und/oder einen gerade vor der Bearbeitungseinrichtung liegenden Abschnitt der Bestandskante erfasst. Die Abtastung der Bestandskante reicht dabei in vorteilhafter Weise ausreichend weit nach vorne vor die jeweilige Bearbeitungseinrichtung, so dass die Landmaschine vorausschauend gesteuert werden kann. Alternativ oder zusätzlich kann auch zumindest ein Abtastsensor den von der Bearbeitungseinrichtung bereits bearbeiteten Flächenabschnitt abtasten, um sozusagen das von der Bearbeitungseinrichtung erzielte Arbeitsergebnis zu erfassen. Hierdurch kann beispielsweise überwacht werden, ob die Landmaschine zu weit in den noch nicht bearbeiteten Bereich hineingefahren wurde, so dass ein unbearbeiteter Streifen zurückgeblieben ist.

Das von der Erfassungseinrichtung bereitgestellte Signal kann grundsätzlich in verschiedener Art und Weise für die Steuerung der Landmaschine beim Anschlussfahren verwendet werden. Nach einer besonders einfachen Ausführung der Erfindung kann die mit der Erfassungseinrichtung verbundene Steuereinrichtung im wesentlichen eine Lenkhilfe bilden, die mit einer Anzeigevorrichtung, beispielsweise in Form eines Bildschirms, den erfassten Bestandskantenverlauf und/oder die erfasste Bestandskantenlage relativ zu der Spur der Bearbeitungseinrichtung anzeigt. Hierdurch kann der Maschinenführer auch bei an sich verstelltem Blickfeld auf die Kante der Bearbeitungseinrichtung durch Überwachung der Bildschirmanzeige präzise verfolgen, ob er exakt entlang der Bestandskante fährt.

Über die bloße Anzeige des Ist-Zustands hinaus kann die Steuereinrichtung in Abhängigkeit eines Signals der Erfassungseinrichtung auch Steuerbefehle generieren, die ein präzises Anschlussfahren bewirken. Insbesondere kann die Steuereinrichtung eine Lenksignaleinrichtung zur Bereitstellung eines Lenksignals für die Lenkung der Räder der Landmaschine aufweisen. Dieses Lenksignal kann in Weiterbildung der Erfindung in verschiedener Art und Weise dem Maschinenführer angezeigt werden. Vorzugsweise kann eine visuelle Anzeigevorrichtung vorgesehen sein, die in Abhängigkeit des generierten Lenksignals dem Maschinenführer den vorzunehmenden Lenkradeinschlag, beispielsweise in Form eines Pfeils, anzeigt, der in einfacher Form lediglich die Richtung des Lenkradeinschlags vorgibt, darüber hinaus aber auch den Betrag bzw. die Größe des Lenkradeinschlags angeben kann, beispielsweise durch eine verschiedene Größe und/oder eine verschiedene Farbe des jeweils angezeigten Symbols. Beispielsweise kann ein größerer vorzunehmender Lenkradeinschlag durch einen längeren Pfeil in kräftiger roter Farbe angezeigt werden, während ein kleinerer Lenkradeinschlag durch einen kürzeren Pfeil in blasser gelber Farbe anzeigbar ist. Alternativ oder zusätzlich zu einer solchen visuellen Anzeige kann auch eine akustische Anzeigevorrichtung vorgesehen sein, die dem Maschinenführer den vorzunehmenden Lenkradeinschlag akustisch beispielsweise durch gesprochene Lenkanweisungen vorgibt.

In weiterer bevorzugter Ausführung der Erfindung kann die Steuereinrichtung auch aktiv in die Steuerung des Systems der Landmaschine eingreifen. In bevorzugter Weiterbildung der Erfindung kann die Steuereinrichtung eine Lenkeinrichtung zur automatischen oder ggf. halbautomatischen Lenkung der Landmaschine in Abhängigkeit des generierten Lenksignals aufweisen. In Abhängigkeit der erfassten Bestandskante, deren Lage und ihres Verlaufs bewirkt die Steuereinrichtung selbsttätig den Lenkradeinschlag der Landmaschine, um ein präzises Anschlussfahren zu erreichen. Die Steuerung kann dabei ggf. halbautomatisch dahingehend ausgebildet sein, dass der Maschinenführer sozusagen als übergeordnete Steuerungsinstanz jederzeit in die Lenkung eingreifen kann, um beispielsweise Hindernissen auszuweichen.

Alternativ oder zusätzlich zur Lenkung der Landmaschine kann die Steuereinrichtung in Abhängigkeit der Bestandskantenerfassung auch diverse verstellbare Elemente der Landmaschine steuern. In Weiterbildung der Erfindung kann die Steuereinrichtung mindestens ein quer zur Spur der Landmaschine verstellbares Spureinstellelement in Abhängigkeit der Bestandskantenerfassung ansteuern und die Lage des Elements entsprechend verändern. Beispielsweise kann die Arbeitsbreite der Bearbeitungseinrichtung und/oder ihre Lage quer zur Fahrspur der Landmaschine verändert werden, um hierdurch die Bearbeitungseinrichtung präzise an der Bestandskante entlang zu führen, wenn beispielsweise ein Anschlussfahren nicht oder nicht ausreichend durch Lenken des Fahrzeugs sichergestellt ist.

Die vorgeschlagene Anschlussfahrsteuerung kann grundsätzlich bei verschiedenen Landmaschinen eingesetzt werden, so insbesondere bei selbstfahrenden landwirtschaftlichen Maschinen, wie Mähdreschern, oder landwirtschaftlichen Maschinenkombinationen in Form eines Schleppers und eines daran angebauten Anbaugeräts, wie beispielsweise einem Mähwerk, einer Sämaschine oder einem Pflug. Dabei kann die Erfassungseinrichtung grundsätzlich an verschiedener Stelle angeordnet sein. Beispielsweise kann an den Schlepper der zumindest eine Abtastsensor angeordnet sein. Alternativ oder zusätzlich kann auch das Anbaugerät mit einem Abtastsensor versehen sein. In Weiterbildung der Erfindung ist zumindest ein Abtastsensor an der oder in der Nähe der Bearbeitungseinrichtung vorgesehen, um die Bestandskante bearbeitungsnah erfassen zu können.

Die Erfindung wird nachfolgend anhand bevorzugter Ausführungsformen und zugehöriger Zeichnungen näher erläutert. In den Zeichnungen zeigen:
- Fig. 1:: eine Draufsicht auf eine Landmaschine in Form eines an einen Schlepper angebauten Mähwerks, an dessen beiden heckseitig angebauten Teilen Abtastsensoren zur Bestandskantenerfassung angeordnet sind,
- Fig. 2:: eine Darstellung einer von den Abtastsensoren verwendbaren Gauss'schen Pulsfamilie zweiter Ordnung, wobei das Diagramm (a) den Pulsverlauf über der Zeit und das Diagramm (b) die Frequenzverteilung eines solchen Abtastsignalpulses zeigt,
- Fig. 3:: eine Darstellung der von den Abtastsensoren verwendbaren Chirpsignale, wobei die Signalfrequenz über der Zeit aufgetragen ist und wobei fₒ die Startfrequenz eines Chirpsignals T die Chirpdauer und B die Bandbreite bezeichnet,
- Fig. 4:: eine Draufsicht auf einen Anbaupflug, an dem ein Abtastsensor zur Bestandskantenerfassung montiert ist, und
- Fig. 5:: eine Draufsicht auf eine Sämaschine, bei der im Bereich der Särohre seitliche Abtastsensoren zur Bestandskantenerfassung vorgesehen sind.

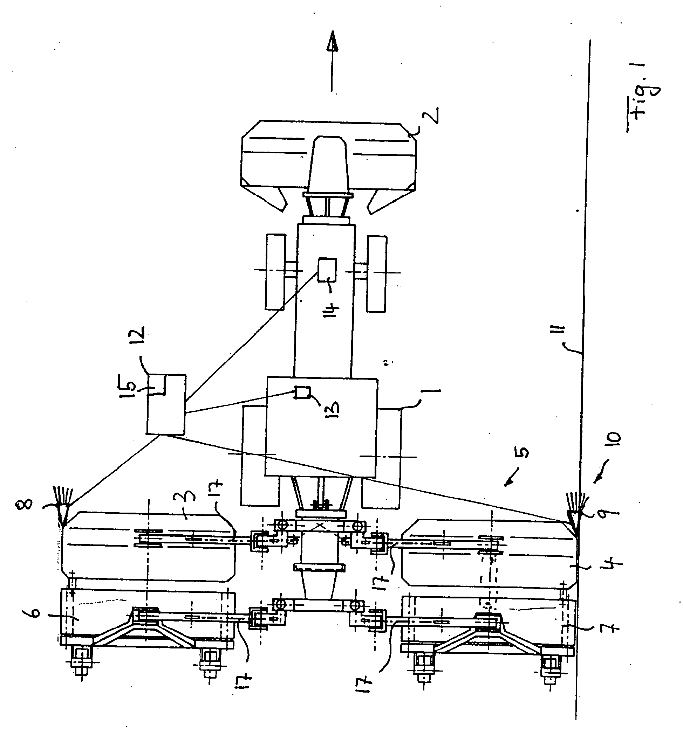

Die in Figur 1 gezeigte Landmaschine umfasst einen Schlepper 1, an den ein anbaubares Mähgerät umfassend ein Frontmähwerk 2 und zwei seitlich auskragende Heckmähwerke 3 und 4 angebaut ist. Die Mähwerke 2, 3 und 4 ergänzen einander derart, dass die gesamte Arbeitsbreite der Mähmaschine 5 von den äußeren Kanten der Heckmähwerke 3 und 4 definiert wird. Wie Figur 1 zeigt, können den Mähwerken, insbesondere den Heckmähwerken 3 und 4, Konditionierer 6 und 7 mit Querförderern nachgeschaltet sein, so dass die Mähmaschine 5 insgesamt das abgemähte Erntegut in einem mittigen Schwad ablegt.

An den äußeren Rändern der Heckmähwerke 3 und 4 sind Abtastsensoren 8 und 9 einer Erfassungseinrichtung 10 zur Erfassung des Verlaufs und der Lage einer Bestandskante 11 vorgesehen, entlang derer die Mähmaschine 5 bewegt werden soll, um das Feld durch Anschlussfahren Spur für Spur abzumähen. In der gezeichneten Ausführungsform sind dabei auf beiden Seiten der Mähmaschine 5 Abtastsensoren 8 und 9 angeordnet, um bei Umkehrung der Fahrtrichtung ebenfalls die entsprechende Bestandskante 11 abtasten zu können, wenn ein Feld hin- und hergehend entlang eines mäanderförmigen Fahrpfades abgemäht wird. Die Bestandskante 11 ist dabei im Falle eines Mähwerks die Schnittkante, die den bereits abgemähten Bereich eines Feldes von dem noch nicht abgemähten Bereich trennt.

Die Abtastsensoren 8 und 9 sind mit einer elektronischen Steuereinrichtung 12 verbunden, die die von den Abtastsensoren 8 und 9 erhaltenen Signale auswertet und in der gezeichneten Ausführungsform einerseits eine Anzeigevorrichtung 13 in Form eines Displays im Cockpit des Schleppers 1 ansteuert und andererseits eine Lenkeinrichtung 14 steuert, die in Abhängigkeit der Lage und des Verlaufs der erfassten Bestandskante 11 den Lenkeinschlag der Räder des Schleppers 1 steuert. Die elektronische Steuereinrichtung 12 umfasst hierzu eine Lenksignaleinrichtung 15, die in Abhängigkeit des von den Abtastsensoren 8 und 9 empfangenen Abtastsignals ein Lenkeinschlagssignal bereitstellt. Dieses Lenkeinschlagssignal wird einerseits auf der Anzeigevorrichtung 13 beispielsweise in Form eines Pfeils dargestellt, der je nach Richtung und Größe des vorzunehmenden Lenkeinschlags in unterschiedliche Richtungen zeigt und eine unterschiedliche Länge besitzt. Zusätzlich kann auf der Anzeigevorrichtung 13 unmittelbar die erfasste Lage und der erfasste Verlauf der Bestandskante 11 relativ zu der Arbeitsspur der Mähwerke oder deren Rand angezeigt werden, so dass der Maschinenführer auf dem Display der Anzeigevorrichtung 13 sowohl den Ist-Zustand sieht als auch die entsprechende Lenksignale ablesen kann.

Zusätzlich wird das Lenkeinschlagssignal auf die genannte Lenkeinrichtung 14 gegeben, so dass beispielsweise nach Drücken eines automatischen Lenkknopfes in einen Automatikmodus der Schlepper 1 von der Steuereinrichtung gelenkt wird, so dass er exakt die Mähmaschine 5 entlang der Bestandskante 11 über das Feld führt.

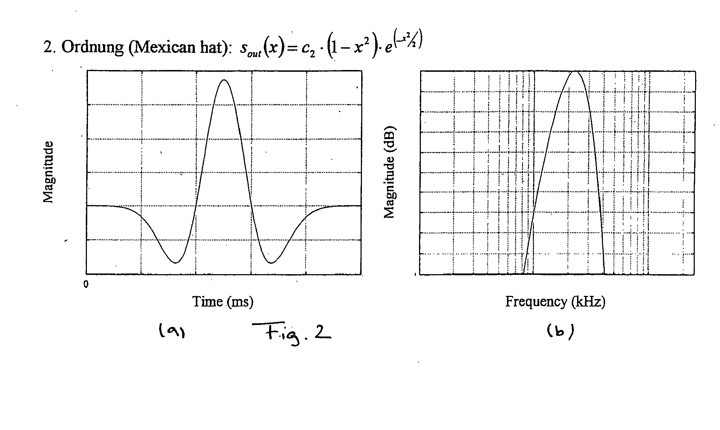

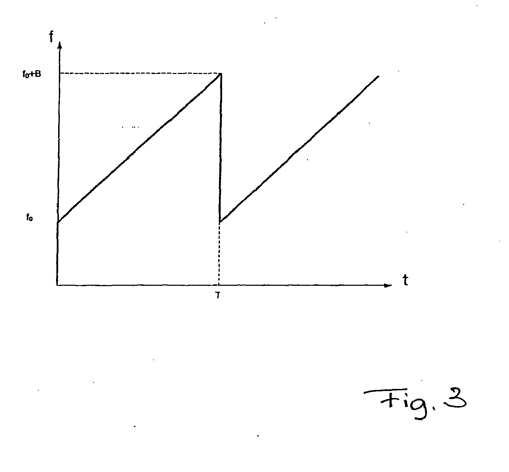

Wie die Figuren 2 und 3 zeigen, können die Abtastsensoren 8 und 9 mit verschiedenen Abtastsignalen arbeiten. Die Abtastsensoren 12 sind dabei jeweils akustische Sensoren, die im hörbaren Frequenzspektrum arbeiten und jeweils einen Breitbandlautsprecher sowie einen Breitbandempfänger besitzen, die für einen Frequenzbereich von 20 Hz bis 22 kHz geeignet sind.

Zur Abtastung der Bestandskante 11 arbeiten die Abtastsensoren 8 und 9 dabei vorteilhafterweise mit einem breitbandigen Abtastsignal in einem Frequenzbereich von 10 kHz bis 20 kHz. Hierdurch kann einerseits eine Reflexion des Abtastsignals an den noch stehenden Grünfutterhalmen oder den Getreidehalmen bzw. allgemein der Erntegutschnittkante erreicht werden, so dass eine präzise Erfassung der Lage und des Verlaufs der Bestandskante 11 ermöglicht wird. Die Abtastsensoren 8 und 9 leiten dabei den Abtaststrahl des akustischen Signals vorteilhafterweise seitlich und/oder von oben auf die Bestandskante 11.

Wie Figur 2 zeigt, können die Abtastsensoren 8 und 9 dabei vorteilhafterweise mit einer sogenannten Gauss'schen Pulsfamilie arbeiten, wobei in Figur 2 eine Gauss'sche Pulsfamilie zweiter Ordnung, der sogenannte "Mexican hat" dargestellt ist. Die Dauer des Signalpulses kann dabei im Bereich von etwa 1 ms liegen, wobei mit Signalpulsen in einem Frequenzbereich von 10 kHz bis 20 kHz gearbeitet werden kann.

Alternativ oder zusätzlich können die Abtastsensoren in einem zweiten Betriebsmodus mit Chirpsignalen arbeiten, wie sie Figur 3 zeigt. Solche Chirpsignale können hinsichtlich ihres Frequenzverlaufs das in Figur 3 gezeigte Sägezahnprofil aufweisen, bei dem beispielsweise mit einer Startfrequenz f₀ von etwa 10 kHz und einer Bandbreite B von etwa 10 kHz gearbeitet wird. Die Chirpdauer T kann 1 ms betragen. Die Breitbandigkeit der Signale stellt dabei sicher, dass Störgeräusche nur geringen Einfluss auf die Signalauswertung haben.

Stellt die Steuereinrichtung 12 anhand des von den Abtastsensoren erhaltenen Signals fest, dass die erfasste Bestandskante 11 aus einem Soll-Lagefenster beispielsweise nach rechts hinauszulaufen droht, wird ein nach rechts weisendes Lenkeinschlagsignal bereitgestellt und eine entsprechende Darstellung auf dem Display der Anzeigevorrichtung 13 generiert. Zusätzlich kann die Lenkeinrichtung 14 automatisch den entsprechenden Radeinschlag bewirken.

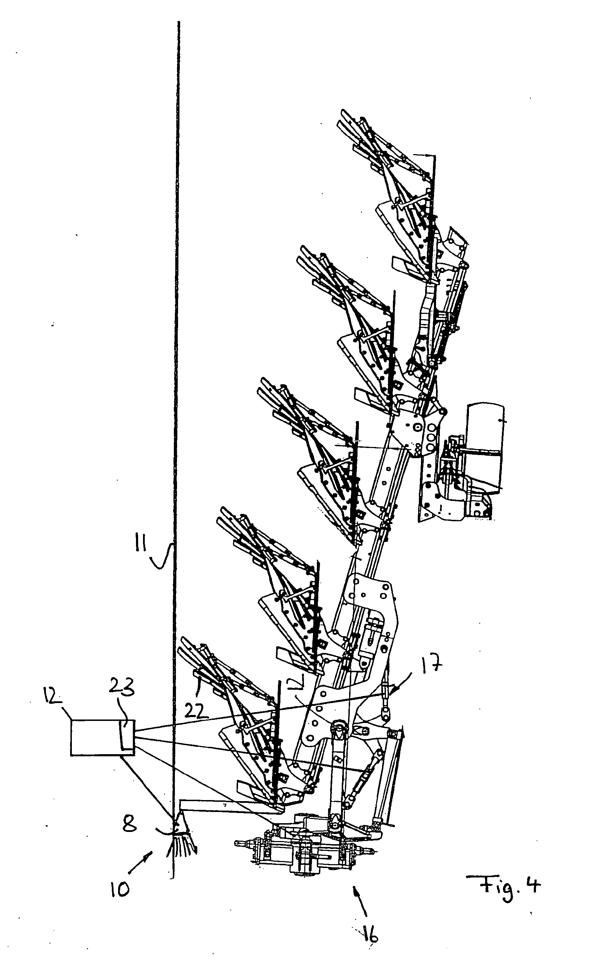

Figur 4 zeigt eine weitere Ausführungsform der Erfindung, nach der als Landmaschine auch ein Pflug 16 einen entsprechenden Abtastsensor 8 tragen kann. Der Abtastsensor 8 ist dabei vorteilhafterweise ebenfalls im Bereich der Kante der Arbeitsbreite des Pflugs angeordnet. Wie Figur 4 zeigt, sitzt der Abtastsensor 8 auf einem entsprechenden Arm am vorderen Ende der Pflugscharenreihe und überwacht im wesentlichen den Spurbereich vor dem Arbeitsbereichsrand der ersten Pflugschar, die den Rand der Arbeitsbreite des Pflugs definiert. Dieser Bereich des Pflugs soll entlang der Bestandskante 11 geführt werden, die beim Pflügen von einer Bodenfurche definiert wird, die beim letzten Umlauf von der letzten Pflugschar des Pflugs 16 aufgeworfen wurde.

Alternativ oder zusätzlich zu der in Verbindung mit Figur 1 beschriebenen Lenkhilfe kann bei dieser Ausführungsform gemäß Figur 4 auch vorgesehen sein, dass die mit dem Abtastsensor 8 verbundene Steuereinrichtung 12 ein Stellglied 17, beispielsweise in Form eines hydraulischen Aktors, ansteuert, mittels dessen die Position der Bearbeitungseinrichtung bzw. der Arbeitswerkzeuge, sprich der Pflugscharen, und/oder die Arbeitsbreite der Bearbeitungseinrichtung quer zur Spurrichtung verstellt werden kann, um hierdurch ein exaktes Anschlussfahren zu erreichen. Mit anderen Worten wird die Lage der Arbeitswerkzeuge des Anbaugeräts quer zur Fahrspur des Schleppers verstellt, so dass auch ohne oder ggf. zusätzlich zu Lenkkorrekturen am Schlepper eine Anpassung des Arbeitsbereichs an die Bestandskante erreicht werden kann. Es versteht sich, dass eine solche Querverstellung der Bearbeitungseinrichtung nicht nur bei Anbaugeräten, sondern auch bei selbstfahrenden Geräten vorgesehen sein kann.

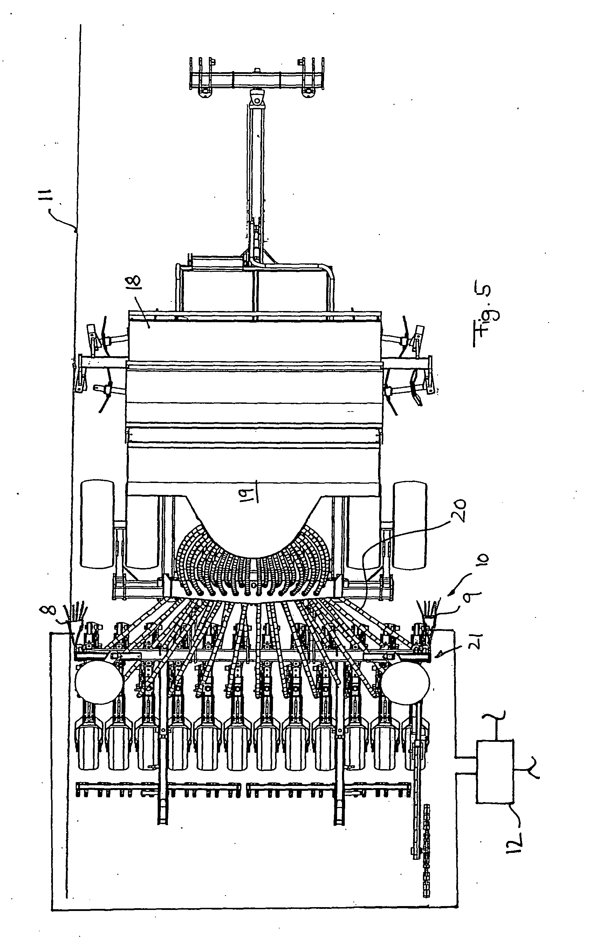

Figur 5 zeigt als weiteres Ausführungsbeispiel einer Landmaschine eine Sämaschine 18, bei der aus einem Saatgutspeicher 19 über Saatgutleitungen 20 Saatgut zu Säscharen 21 geführt wird. Ähnlich der in Figur 1 gezeichneten Ausführung sind auch hier rechts und links an den Rändern der Bearbeitungseinrichtung, die hier in Form einer Säscharreihe ausgebildet ist, die Abtastsensoren 8 und 9 angeordnet, mit Hilfe derer die relative Lage des Arbeitsbereichs der Landmaschine relativ zur Bestandskante 11 und deren Verlauf erfasst werden kann. Es ergibt sich eine Arbeitsweise analog der in Figur 1 gezeigten Ausführungsform.

## Patentansprüche

1. Landmaschine mit einer Bearbeitungseinrichtung (2, 3, 4; 21; 22) zur Erntegut-, Saatgut- und/oder Bodenbearbeitung, einer Erfassungseinrichtung (10) zur berührungslosen Erfassung des Verlaufs und/oder der Lage einer Bestandskante (11), insbesondere Erntegutschnittkante oder Bodenfurche, einer zu bearbeitenden Fläche, sowie einer Steuereinrichtung (12) zur Steuerung des Anschlussfahrens der Landmaschine entlang der erfassten Bestandskante (11), **dadurch gekennzeichnet, dass** die Erfassungseinrichtung (10) zumindest einen akustischen, im hörbaren Frequenzspektrum arbeitenden Abtastsensor (8, 9) aufweist, der die Bestandskante (11) in einem Frequenzbereich von 20 Hz bis 20 kHz abtastet.

2. Landmaschine nach dem vorhergehenden Anspruch, wobei der zumindest eine Abtastsensor (8, 9) in einem Frequenzbereich von 10 kHz bis 20 kHz arbeitet.

3. Landmaschine nach dem vorhergehenden Anspruch, wobei der Abtastsensor (8, 9) mit einem Breitbandsignal mit einer Bandbreite von wenigstens 5 kHz, vorzugsweise etwa 10 kHz, arbeitet.

4. Landmaschine nach einem der vorhergehenden Ansprüche, wobei der Abtastsensor (8, 9) mit einem Abtastsignalpuls aus der Gauss'schen Pulsfamilie, vorzugsweise mit Gauss'schen Pulsen zweiter Ordnung, arbeitet.

5. Landmaschine nach einem der vorhergehenden Ansprüche, wobei der zumindest eine Abtastsensor (8, 9) und/oder ein weiterer Abtastsensor (8, 9) mit Chirpsignalen in einem Frequenzbereich von 10 kHz bis 20 kHz arbeitet.

6. Landmaschine nach einem der vorhergehenden Ansprüche, wobei der zumindest eine Abtastsensor (8, 9) mit Abtastsignalen von einer Dauer von weniger als 10 ms, vorzugsweise etwa 1 ms, arbeitet.

7. Landmaschine nach einem der vorhergehenden Ansprüche, wobei der zumindest eine Abtastsensor (8, 9) mit einer Periodendauer zwischen den Abtastsignalen von weniger als 1 Sekunde, vorzugsweise etwa 100 ms, arbeitet.

8. Landmaschine nach einem der vorhergehenden Ansprüche, wobei der zumindest eine Abtastsensor (8, 9) in zwei verschiedenen Betriebsmodi mit verschiedenen Abtastsignalen, vorzugsweise in einem ersten Betriebsmodus mit Abtastsignalpulsen aus der Gauss'schen Pulsfamilie und in einem zweiten Betriebsmodus mit Chirpsignalen, betreibbar ist.

9. Landmaschine nach dem vorhergehenden Anspruch, wobei der zumindest eine Abtastsensor (8, 9) mit Abtastsignalen in verschiedenen Frequenzbereichen betreibbar ist.

10. Landmaschine nach einem der vorhergehenden Ansprüche, wobei der zumindest eine Abtastsensor (8, 9) einen Breitbandsender sowie einen Breitbandempfänger jeweils für einen Frequenzbereich von 20 Hz bis 22 kHz aufweist.

11. Landmaschine nach einem der vorhergehenden Ansprüche, wobei der zumindest eine Abtastsensor (8, 9) in einem Randbereich der Bearbeitungseinrichtung (2, 3, 4; 21; 22) angeordnet ist und/oder einen in Fahrtrichtung vor der Bearbeitungseinrichtung (2, 3, 4; 21; 22) liegenden Randbereich des Arbeitsbereichs der Bearbeitungseinrichtung abtastet.

12. Landmaschine nach einem der vorhergehenden Ansprüche, wobei die Landmaschine einen Schlepper (1) und ein daran angebautes Anbaugerät (5; 16; 18) wie Ladewagen, Zetter, Mähwerk oder Pflug umfasst, und der zumindest eine Abtastsensor (8, 9) an dem Anbaugerät vorgesehen ist.

13. Landmaschine nach einem der vorhergehenden Ansprüche, wobei die Steuereinrichtung (12) eine Anzeigevorrichtung (13) umfasst, die den erfassten Bestandskantenverlauf und/oder die erfasste Bestandskantenlage relativ zu der Landmaschine, insbesondere deren Arbeitsbereich der Bearbeitungseinrichtung, anzeigt.

14. Landmaschine nach einem der vorhergehenden Ansprüche, wobei die Steuereinrichtung (12) eine Lenksignaleinrichtung (15) zur Bereitstellung eines Lenksignals für die Lenkung der Räder der Landmaschine aufweist.

15. Landmaschine nach dem vorhergehenden Anspruch, wobei die Steuereinrichtung (12) eine Anzeigevorrichtung (13) zur visuellen und/oder akustischen Anzeige des vorzunehmenden Lenkradeinschlags, insbesondere dessen Richtung und/oder dessen Größe, in Abhängigkeit des Lenksignals aufweist.

16. Landmaschine nach einem der beiden vorhergehenden Ansprüche, wobei die Steuereinrichtung (12) eine Lenkeinrichtung (14) zur automatischen Steuerung des Lenkeinschlags der Landmaschine in Abhängigkeit des Lenksignals aufweist.

17. Landmaschine nach einem der vorhergehenden Ansprüche, wobei die Bearbeitungseinrichtung (22, 3, 4) zumindest ein verstellbares Element und einen Aktor (17) zur Verstellung dieses Elements aufweist, wobei die Steuereinrichtung (12) eine Aktorsteuereinheit (23) zur Steuerung des zumindest einen Aktors (17) in Abhängigkeit der erfassten Lage und/oder des erfassten Verlaufs der Bestandskante (11) aufweist.

18. Landmaschine nach dem vorhergehenden Anspruch, wobei das zumindest eine verstellbare Element ein Spurverstellelement zur Verstellung der Lage zumindest eines Bearbeitungswerkzeugs (22, 3, 4) quer zur Fahrtrichtung der Landmaschine umfasst.
